# EUROPEAN PATENT APPLICATION

(11) **EP 4 613 721 A1**
(43) Date of publication of application: **10.09.2025**
(21) Application number: 24162180.4
(22) Date of filing: 07.03.2024
(51) Int. Cl.: C04B 28/04, C04B 40/06, C04B 103/30, C04B 103/00, C04B 103/40, C04B 18/14, C04B 18/08, C04B 18/10, C04B 18/16, C04B 14/10, C04B 14/28, C04B 14/26, C04B 14/06, C04B 24/18, C04B 24/22, C04B 24/26, C04B 24/24, C04B 24/02, C04B 24/10, C04B 24/28, C04B 24/32

(54) **FLOW PROMOTER FOR WET CONCRETE FORMULATION BASED ON LOW CLINKER BINDER WITH LOW WATER BINDER RATIO INCLUDING A WATER REDUCING AGENT AND METHOD FOR PREPARING SAID WET CONCRETE FORMULATION**

(71) Applicant: Ecocem Materials Limited, Dublin 3 D03E0C0 (IE); Ecole Normale Supérieure Paris-Saclay, 91190 Gif-sur-Yvette (FR); CentraleSupélec, 91110 Gif-sur-Yvette Cedex (FR); Centre National de la Recherche Scientifique, 75016 Paris (FR)
(72) Inventor: FROUIN, Laurent, 75012 PARIS (FR); ALFANI, Roberta, 75012 PARIS (FR); CHAOUCHE, Mohend, 91190 GIF SUR YVETTE (FR); CRUICKSHANK, Matthew, 75012 PARIS (FR)
(74) Representative: Plasseraud IP

(57) **Abstract**

The invention concerns a premix for a concrete composition, comprising a binder B, at least one water reducing polymer and a flow promoter FP,
said binder B comprising less than 55 dry weight% of Portland clinker, at least one supplementary cementitious material and optionally a filler F in a quantity equal or greater than 15% dry weight relative to the total weight of binder B,
said flow promoter FP comprising:
FP1. At least one non-ionic water-soluble compound,
FP2. Optionally at least one surfactant,

FP being present in a quantity of more than or equal to 0.001 dry weight% and less than or equal to 1.0 dry weight% relative to the total weight of the binder B,
FP1 being different from FP2.

## Description

### Field of the invention

The technical field of the invention relates to low carbon concretes. Low carbon concretes are ecofriendly concretes which include supplementary cementitious materials (SCMs) as substituents to Portland clinker.

### Background Art

Supplementary cementitious materials (SCMs), for instance Ground Granulated Blast furnace Slag (GGBS), are being increasingly used in concrete mixes since ordinary Portland cement production has a strong and negative impact on the environment due to the emissions of large quantities of carbon dioxide.

Another way to decrease the impact on the environment, is to reduce Portland clinker content in concretes and at the same time reduce water/binder ratio in order to keep required performances. In other words, current research not only aims to replace Portland clinker, but also to decrease the water/binder ratio. However, decreasing the water/binder ratio leads to more viscous compositions, especially for concrete compositions comprising SCM and fillers. This may lead to concrete compositions that are not workable in the fresh state.

So as to improve fluidity and workability of concretes, it is common to add a water reducing polymer, also known as a plasticizer or superplasticizer.

Although these water reducing polymers are efficient for concretes having a binder essentially made of ordinary Portland cement, they are often less effective in improving fluidity and workability of mortars and concretes having a binder containing SCMs and especially at low water/binder ratios.

Hence, a given water reducing polymer is more or less efficient depending on the binder or concrete composition.

So as to overcome this issue, efforts have been made to develop water reducing polymers designed for alternative binder compositions made with SCMs and alkaline activating agents.

However, it would be beneficial to have a solution, which allows the use of a wide variety of water reducing polymers in concrete compositions comprising SCMs and fillers.

In this context, the invention aims at addressing at least one of the above problems and/or needs, through fulfilling at least one of the following objectives:
- O1- Providing a method for decreasing the flow time of a wet concrete formulation including some combinations of hydraulic binders, supplementary cementitious materials, and optionally filler materials with a low water to binder weight ratio.
- 02- Providing premix for wet concrete formulation able to decrease the flow time of said wet concrete formulation
- O3- Providing concrete compositions with appropriate rheology in the wet state, before setting, and with good mechanical properties after setting, especially good early age strength.

### Summary of the invention

At least one of the above objectives is reached thanks to a premix for a concrete composition, comprising a binder B, at least one water reducing polymer and a flow promoter FP,
said binder B comprising less than 55 dry weight% of Portland clinker, at least one supplementary cementitious material and optionally a filler F in a quantity equal or greater than 15% dry weight relative to the total weight of binder B,
said flow promoter FP comprising:
   FP1. At least one non-ionic water-soluble compound,
   FP2. Optionally at least one surfactant,
FP being present in a quantity of more than or equal to 0.001 dry weight% and less than or equal to 1.0 dry weight% relative to the total weight of the binder B,
FP1 being different from FP2.

The invention also concerns dry concrete composition comprising aggregates A, a binder B, and a flow promoter FP:
said binder B comprising less than 55 dry weight% of Portland clinker, relative to the total dry weight of the binder B, at least one supplementary cementitious material and optionally a filler F in a quantity equal or greater than 15% dry weight relative to the total weight of binder B,
said flow promoter FP comprising:
   FP1. At least one non-ionic water-soluble compound,
   FP2. Optionally at least one surfactant,
FP being present in a quantity of more than or equal to 0.001 dry weight% and less than or equal to 1.0 dry weight% relative to the total weight of the binder B,
FP1 being different from FP2.

The invention is further directed to a wet concrete formulation comprising aggregates A, a binder B, a flow promoter FP and water:
said binder B comprising less than 55 dry weight% of Portland clinker, relative to the total dry weight of the binder B, at least one supplementary cementitious material and optionally a filler in a quantity equal or greater than 15% dry weight relative to the total weight of binder B,
said flow promoter FP comprising:
   FP1. At least one non-ionic water-soluble compound,
   FP2. Optionally at least one surfactant,
FP being present in a quantity of more than or equal to 0.001 dry weight% and less than or equal to 1.0 dry weight% relative to the total weight of the binder B,
FP1 being different from FP2.

In addition, the invention relates to a process for preparing a wet concrete formulation comprising a mixing step of water, aggregates A, a binder B and a flow promoter FP,
said binder B comprising less than 55 dry weight% of Portland clinker, relative to the total dry weight of the binder composition, at least one supplementary cementitious material and optionally a filler F in a quantity equal or greater than 15% dry weight relative to the total weight of binder B,
said flow promoter FP comprising:
   FP1. At least one non-ionic water-soluble compound,
   FP2. Optionally at least one surfactant,
the binder B being prepared before the mixing step or in situ during the mixing step of the different components of the binder B taken separately and/or under the form of premix(es),
FP being present in a quantity of more than or equal to 0.001 dry weight% and less than or equal to 1.0 dry weight% relative to the total weight of the binder B,
FP1 being different from FP2.

The invention also concerns a method for decreasing the flow time of a wet concrete formulation in an inverted cone method according to French standard XP P18-469 of January 2019, comprising a step of adding a flow promoter FP during a process of preparing said wet concrete formulation,
said flow promoter FP comprising:
   FP1. At least one non-ionic water-soluble compound,
   FP2. Optionally at least one surfactant,
FP1 being different from FP2,
FP1 and FP2 being added separately, simultaneously or under a mixture form.

### Definitions

According to the terminology of this text, the following non limitative definitions have to be taken into consideration:
"binder" refers to "hydraulic binder" meaning any material that hardens just by adding water, like cement.

"cement" is understood as meaning a powdery substance made for use in making mortar or concrete. They are mineral binders, possibly free from any organic compound. It refers to any ordinary cement and it includes Ordinary Portland Cement (OPC), blends of OPC, pozzolanic materials and/or filler and alkali-activated based cements.

"Portland clinker" is understood as the main constituent phase of Ordinary Portland Cement obtained from the co-calcination of limestone and an aluminosilicate source.

"concrete" refers to a material composed of binder(s), aggregates such as sand and other components, like admixtures.

"Dry concrete composition" refers to a material composed of binder(s), aggregates such as sand and gravel and other components, like admixtures.

"Wet concrete formulation" refers to a material composed of binder(s), aggregates such as sand and gravel and other components, like admixtures and water.

"Hardened concrete product" refers to the hardened product obtained from wet concrete formulation after reaction and evaporation of the water.

### Detailed description of the invention

### The Premix

As mentioned above, the invention concerns in a first aspect a premix for a concrete composition, comprising a binder B, at least one water reducing polymer and a flow promoter FP, said binder B comprising less than 55 dry weight% of Portland clinker, at least one supplementary cementitious material and optionally a filler F in a quantity equal or greater than 15% dry weight relative to the total weight of binder B,
said flow promoter FP comprising:
   FP1. At least one non-ionic water-soluble compound,
   FP2. Optionally at least one surfactant,
FP being present in a quantity of more than or equal to 0.001 dry weight% and less than or equal to 1.0 dry weight% relative to the total weight of the binder B,
FP1 being different from FP2.

In the sense of the present invention, a premix is a dry composition intended to be mixed with water and aggregates to form a concrete. As used herein, "a dry composition" refers to a composition that is in the form of powder and ready to be mixed with water. In other words, a dry composition of the invention may contain some moisture, but it essentially contains solid components which are intended to be mixed with water.

The flow promoter FP has an interest in specifics embodiments. As set forth above, some concretes based on supplementary cementitious materials may be too viscous in the fresh state, i.e., just after the step of mixing the dry components in water, and since water reducing polymers are designed for high contents of Portland clinker concrete, the same are often inefficient.

Hence, in the context of the invention, the binder is a binder comprising less than 55 dry weight% of Portland clinker and at least one supplementary cementitious material, more specifically, less than 45 dry weight% of Portland clinker, even more specifically less than 35 dry weight% of Portland clinker. These kinds of binders include, but are not limited to, all the cements comprising less than 55 dry weight% of Portland clinker and at least one SCM defined in standards NF EN197-1, NF EN197-5, NF EN197-6 NF and EN 15743.

The supplementary cementitious material could be of any kind. As such, in the context of the invention, the supplementary cementitious material may be chosen in the group comprising, preferably consisting of, ground granulated blast furnace slag, fly ash, activated clay, calcined clay, silica fume, basic oxygen furnace slag, natural pozzolanic materials, rice husk ash, activated recycled concrete fine aggregates or a mixture thereof.

In the context of the invention, "filler" refers to a material whose primary role in a binder is physical rather than chemical. Fillers occupy pore spaces and are used as substitutes for hydraulic binders and supplementary cementitious materials as they are less energy intensive. Here the term refers to ground limestone, ground dolomite, marble powder, siliceous sands, recycled concrete fine aggregates or a mixture thereof.

Preferably, the filler is a limestone filler, more preferably, the filler is a natural material sourcing from stone-pit, such as calcite and its polymorphs, like aragonite or vaterite, and dolomite or precipitated calcium carbonates and mixtures thereof.

If present, the quantity of filler is equal or greater than 15% dry weight relative to the total weight of binder B, preferably more than 20% dry weight relative to the total weight of binder B, more preferably more than 25% dry weight relative to the total weight of binder B and even more preferably more than 30% dry weight relative to the total weight of binder B.

One of the purposes of the invention is the willingness to render each water reducing polymer efficient in concrete compositions containing a large amount of SCMs and optionally fillers.

As such, according to the invention the water reducing polymer is chosen in the group comprising, preferably consisting of, lignosulfonate polymers, melamine sulfonate polymers, naphthalene sulfonate polymers, polycarboxylic acid ether polymers, polyoxyethylene phosphonates, vinyl copolymers, methallyl ether polycarboxylic acid ether and mixtures thereof.

Surprisingly, the applicants have found out that the use of a flow promoter allows the possibility of using a very wide range of water reducing polymers, usually designed for Portland clinker-based concrete. The flow promoter FP comprises a non-ionic water-soluble compound FP1 and optionally a surfactant FP2 different from FP1. The flow promoter allows decreasing the flow time of a wet concrete formulation in an inverted cone method according to French standard XP P18-469 of January 2019, without having a negative impact on the resulting properties like mechanical strength, slump and so on. The percentage of decrease needed depends on several factors. First, the initial time, i.e. the time that a wet fresh concrete formulation which does not comprise the flow promoter, takes to pass the inverted cone, is a parameter to be taken into account to determine the percentage of decrease. Second, the purpose of the concrete formulation is also a parameter to be taken into account, indeed, depending on the final use of the concrete, the time to pass the inverted cone changes. For these reasons, a person skilled in the art would adjust the quantity of the flow promoter.

In certain embodiments, in the premix, the quantity of the flow promoter is of between 0.001 and 1.0 dry weight% relative to the total weight of the binder B, preferably of between 0.001 and 0.5 dry weight% relative to the total weight of the binder B and more preferably of between 0.001 and 0.1 dry weight% relative to the total weight of the binder B.

According to the invention, FP1 is non-ionic and water soluble. As used herein, "non-ionic" means a polymer that presents an overall neutral electrical charge, i.e. having the same number of positive charge(s) and negative electrical charge(s), or the total absence of any positive or negative electrical charge. As used herein, "water-soluble compound" means a compound that does not increase the turbidity of water at a concentration of 20 g/L à 20°C more than10%. A way to determine if a compound is water-soluble according to the invention is implementing the following protocol:
1) Preparing two sample of 10 mL of the same water,
2) Labelling one of the samples as reference sample,
3) Labelling the second sample as compound sample,
4) Introducing 200 mg of compound to be tested in the compound sample,
5) Measuring the turbidity of reference sample (TRS) with a turbidimeter,
6) Measuring the turbidity of compound sample (TCS) with the same turbidimeter,
7) Calculating the variation of the turbidity with the formula 100 *(TCS-TRS)/TRS,
8) If the variation of the turbidity is less than or equal to 10% the tested compound is a water-soluble compound according to the invention.

The non-ionic water-soluble compound FP1 may be a single molecule, an homopolymer or a co-polymer including two or more types of monomers. In some embodiments, the non-ionic water-soluble compound FP1 is chosen in the group comprising, preferably consisting of, polyols, preferably chosen in the group consisting of glycol, glycerol, erythritol, xylitol, arabitol, ribitol, sorbitol, dulcitol, mannitol, volemitol and mixtures thereof, polyvinylpyrrolidone (PVP), polyacrylamide polyethylene glycol, polyethylene oxide (PEO), propylene glycol, polypropylene glycol, poloxamers, polyvinylalcohol (PeVOH) and mixtures and copolymers thereof. Poloxamers are defined as non-ionic triblock copolymers composed of a central hydrophobic chain of of polyoxypropylene (polypropylene oxide)) flanked by two hydrophilic chains of polyoxyethylene (polyethylene oxide)).

In certain embodiments, in the premix, the quantity of the non-ionic water-soluble FP1 is of between 0.001 and 1.0 dry weight% relative to the total weight of the binder B, preferably of between 0.001 and 0.5 dry weight% relative to the total weight of the binder B and more preferably of between 0.001 and 0.1 dry weight% relative to the total weight of the binder B.

The flow promoter may comprise a surfactant FP2 different from FP1. According to the invention, a surfactant FP2 is defined as a compound which decreases the surface tension of water below 68 mN.m⁻¹. The surfactant may be cationic, anionic or non-ionic, preferably non-ionic. The surfactant is considered non-ionic, a species that presents an overall neutral electrical charge, i.e. having the same number of positive charge(s) and negative charge(s), or the total absence of any positive or negative electrical charge.

### The dry concrete composition

The invention also concerns dry concrete composition comprising aggregates A, a binder B and a flow promoter FP:
said binder B comprising less than 55 dry weight% of Portland clinker, relative to the total dry weight of the binder B, at least one supplementary cementitious material and optionally a filler F in a quantity equal or greater than 15% dry weight relative to the total weight of binder B,
said flow promoter FP comprising:
   FP1. At least one non-ionic water-soluble compound,
   FP2. Optionally at least one surfactant,
FP being present in a quantity of more than or equal to 0.001 dry weight% and less than or equal to 1.0 dry weight% relative to the total weight of the binder B,
FP1 being different from FP2.

Aggregates comprise a large category of particulate material used in construction, including sands, gravels, crushed stones, slag (not-granulated), recycled concrete and geosynthetic aggregates. They serve as reinforcement to add strength to the overall composite material.

Binder B, filler F and the flow promoter FP are as defined above in the part "the premix".

Advantageously, said dry concrete composition can also include, apart from aggregates, one or several ingredients, especially functional admixtures, additions and fibres. In particular, these ingredients are chosen among additives selected from the group, latex, water retention agent, rheological agent, defoamer/antifoams, biocide, pigment, flame retardant, air-entraining agents and retarders like the following compounds:

### • Calcium sulfate

Calcium sulfate is available under three forms. Indeed, calcium sulfate may be anhydrite, hemihydrate or dihydrate. The difference resides in molecule(s) of water bounded to calcium sulfate: anhydrite no water (CaSO₄), hemihydrate contains half molecule of water (CaSO₄. ½ H₂0), dihydrate, also known as gypsum, contains 2 molecules of water (CaSO₄. 2 H₂0). According to the invention, the calcium sulfate is anhydrite calcium sulfate.

### • Defoamer/Antifoams

The possible defoamer is preferably chosen in the group comprising, more preferably consisting in: polyether polyols and mixes thereof.

### • Biocide

The possible biocide is preferably chosen in the group comprising, more preferably consisting in: mineral oxides like zinc oxide and mixes thereof.

### • Pigment

The possible pigment is preferably chosen in the group comprising, more preferably consisting in: TiO₂, iron oxide and mixes thereof.

### • Flame retardant

Flame retardant (or flame proof agent) makes it possible to increase the fire resistance and/or to shrink the speed of flame spreading of the composition.

### • Air-entraining agents

Air-entraining agents (surfactants) are advantageously chosen in the group comprising, more preferably consisting in, natural resins, sulfated or sulfonated compounds, synthetic detergents, organic fatty acids and their mixes, preferably in the group comprising, more preferably consisting in the lignosulfonates, the basic soaps of fatty acids and their mixes, and, more preferably in the group comprising, more preferably consisting in the sulfonate olefins, the sodium lauryl sulfate and their mixes.

### • Retarders

Retarders are advantageously chosen in the group comprising, more preferably consisting in tartric acid and its salts: sodium or potassium salts, citric acid and its salts: sodium (trisodic citrate) and their mixes.

### • Accelerators

Accelerators are preferably alkaline metal salts, preferably sodium chloride, potassium chloride, lithium chloride, sodium carbonate, potassium carbonate, lithium carbonate, calcium nitrate, sodium nitrate, potassium nitrate, lithium nitrate, sodium nitrite, potassium nitrite, lithium nitrite, calcium nitrite, sodium thiocyanate, potassium thiocyanate, lithium thiocyanate, alkanolamines such as triethanolamine (TEA), triisopropanolamine (TIPA), diethanolamine (DEA) or mixture thereof,

In addition, other components may be:
- *Plasticizers*
- *Fibres*
- *Dispersion powders*
- *Wetting agents*
- *Polymeric resins*
- *Complexing agents*
- *Drying shrinkage reducing agents based on polyols.*

The total content of these optional other components in the dry concrete composition is preferably comprised between 0wt% and 5wt% by weight of the total weight of the binder composition, advantageously between 0.2wt% and 2wt%, and more advantageously between 0.5wt% and 1wt%.

### The wet concrete formulation

The invention is further directed to a wet concrete formulation comprising aggregates A, a binder B, a flow promoter FP and water:
said binder B comprising less than 55 dry weight% of Portland clinker, relative to the total dry weight of the binder B, at least one supplementary cementitious material and optionally a filler F in a quantity equal or greater than 15% dry weight relative to the total weight of binder B,
said flow promoter FP comprising:
   FP1. At least one non-ionic water-soluble compound,
   FP2. Optionally at least one surfactant,
FP being present in a quantity of more than or equal to 0.001 dry weight% and less than or equal to 1.0 dry weight% relative to the total weight of the binder B,
FP1 being different from FP2.

Aggregates A, binder B, flow promoter FP and filler F are as defined above.

### The process for preparing a wet concrete formulation

In addition, the invention relates to a process for preparing a wet concrete formulation comprising a mixing step of water, aggregates A, a binder B and a flow promoter FP,
said binder B comprising less than 55 dry weight% of Portland clinker, relative to the total dry weight of the binder composition, at least one supplementary cementitious material and optionally a filler F in a quantity equal or greater than 15% dry weight relative to the total weight of binder B,
said flow promoter FP comprising:
   FP1. At least one non-ionic water-soluble compound,
   FP2. Optionally at least one surfactant,
the binder B being prepared before the mixing step or in situ during the mixing step of the different components of the binder B taken separately and/or under the form of premix(es),
FP being present in a quantity of more than or equal to 0.001 dry weight% and less than or equal to 1.0 dry weight% relative to the total weight of the binder B,
FP1 being different from FP2.

In other words, wet concrete formulation could be prepared by two distinct methods.

In a first method, the dry concrete composition is prepared. The latter is thereafter mixed with water.

In a second method, the wet concrete formulation is prepared by mixing in water each component of the wet concrete formulation.

According to the present disclosure, the term "mixing" has to be understood as any form of mixing.

Aggregates A, binder B, filler F and flow promoter FP are as defined above.

In a preferred embodiment, at least a part of the premix composition and at least a part of the water are mixed together prior to the mixing with the aggregate.

Advantageously, in the process of the invention, the weight ratio water to binder B is comprised between 0.1 and 0.5, advantageously between 0.15 and 0.45, and more advantageously between 0.2 and 0.4.

### Hardened concrete product

The present invention also refers to hardened concrete product obtained from the wet concrete formulation described above.

### The Method for decreasing the flow time

As mentioned above, invention also concerns a method for decreasing the flow time of a wet concrete formulation in an inverted cone method according to French standard XP P18-469 of January 2019, comprising a step of adding a flow promoter FP during a process of preparing said wet concrete formulation,
said flow promoter FP comprising:
   FP1. At least one non-ionic water-soluble compound,
   FP2. Optionally at least one surfactant,
FP1 being different from FP2,
FP1 and FP2 being added separately, simultaneously or under a mixture form.

Flow promoter FP is as defined above.

As set forth above, the flow promoter allows decreasing the flow time of a wet concrete formulation in an inverted cone method according to French standard XP P18-469 of January 2019, without having a negative impact on the resulting properties like mechanical strength, yield stress and so on. The percentage of decrease needed depends on several factors. First the initial time, i.e. the time that a wet fresh concrete formulation which does not comprise the flow promoter, takes to pass the inverted cone, is a parameter to be taken into account to determine the percentage of decrease. Second, the purpose of the concrete formulation is also a parameter to be taken into account, indeed, depending on the final use of the concrete, the time to pass the inverted cone changes.

### Other applications

The invention is especially designed for concrete compositions, but it also might be useful for other cementitious applications, like fluid mortars such as grouting mortars, repair mortars, self levelling mortars.

### Examples

### Preparation of concrete compositions and Trial on concrete compositions

Concrete compositions were prepared by the following procedure: firstly the aggregates and binder were mixed for 1 minute. The admixture system is added in water and the total amount of water + admixture system is added during mixing. The concrete is mixed for an addition of two minutes.

The time flows of wet concrete formulation have been measured according to experimental standard "XP P18-469 - Cone outflow time published by AFNOR on January 2019".

Slump tests were realized with an Abrams cone according to standard NF EN 12350-2.

Water reducing polymer used in the examples are Chryso^{®} Fluid Optima 100, Chryso^{®} Fluid Optima 145 manufactured by Saint Gobain and Viscocrete^{®} tempo 11 manufactured by Sika.

### Example 1: effect of the flow promoter

Three concrete compositions were prepared according to table 1 below:

**Table 1**

| | | | Ref | CE1 | E1 |
|---|---|---|---|---|---|
| Aggregates A | Sand (0-4 mm) | [kg/m³] | 960 | 960 | 960 |
| | Stone (4-10 mm) | | 395 | 395 | 395 |
| | Stone (10/20 mm) | | 630 | 630 | 630 |
| Binder B 350 kg/m³ | B1 (dry weight %) | Portland cement | 20 | 20 | 20 |
| | B2 (dry weight %) | Standard GGBS (d50 = 10µm) | 16,6 | 16,6 | 16,6 |
| | | Fine GGBS (d50 < 5µm) | 13,4 | 13,4 | 13,4 |
| | F (dry weight %) | Ultrafine limestone filler (d50 < 3 µm) | 50 | 50 | 50 |
| | B3 (dry weight %) | Anhydrite | 2 | 2 | 2 |
| Water reducing polymer (weight % compared to the total weight of component B) | | CHRYSO^{®}Fluid Optima 100 | 1,50 | - | - |
| | | Sika^{®} ViscoCrete^{®} TEMPO-11 | - | 1,10 | 1,10 |
| Flow Promoter FP (weight % compared to the total weight of component B) | FP1 | Polyethylene Oxide (Mn= 35000g/mol) | - | - | 0,004 |
| | FP2 | - | - | - | - |
| Water | Water to binder B Weight Ratio | | 0,35 | 0,35 | 0,35 |

Immediately after mixing, the slump and the time flow of each wet concrete formulation have been measured. The results are set forth in table 2 below.

**Table 2**

| | | REF | CE1 | E1 |
|---|---|---|---|---|
| Slump | [mm] | 220 | 220 | 220 |
| Time Flow | [s] | 6 | 11 | 5 |

As can be seen from table 2, the concrete of counter example 1 (CE1) has a time flow of 11 seconds while the concrete of example 1 (E1), identical to CE1 expect that it includes the flow promoter has a time flow of 5 seconds which approximatively corresponds to the time flow of the concrete of the reference example (REF). Also, the slump of all concretes REF, CE1 and E1 are identical.

### Example 2: variation of the binder B

Tow concrete compositions were prepared according to table 3 below:

**Table 3**

| | | | CE2 | E2 |
|---|---|---|---|---|
| Aggregates A | Sand (0-4 mm) | [kg/m³] | 960 | 960 |
| | Stone (4-10 mm) | | 395 | 395 |
| | Stone (10/20 mm) | | 630 | 630 |
| Binder B 350 kg/m³ | B1 (dry weight %) | Portland cement | 30 | 30 |
| | B2 (dry weight %) | Metakaolin | 15 | 15 |
| | F (dry weight %) | Ultrafine limestone filler (d50 < 3 µm) | 53 | 53 |
| | B3 (dry weight %) | Anhydrite | 2 | 2 |
| Water reducing polymer (weight % compared to the total weight of component B) | | CHRYSO^{®} Fluid Optima 145 | 1.35 | 1.35 |
| Flow Promoter FP (weight % compared to the total weight of component B) | FP1 | Glycerol | - | 0,003 |
| | FP2 | t-Octylphenoxypolyethoxyethanol | | |
| Water | Water to binder B Weight Ratio | | 0,345 | 0,345 |

Immediately after mixing, the slump and the time flow of each wet concrete formulation have been measured. The results are set forth in table 4 below.

**Table 4**

| | | CE2 | E2 |
|---|---|---|---|
| Slump | [mm] | 200 | 200 |
| Time Flow | [s] | 17 | 7 |

As can be seen from table 4, the concrete of counter example 2 (CE2) has a time flow of 17 seconds while the concrete of example 2 (E2), identical to CE2 expect that it includes the flow promoter has a time flow of 7. Also, the slump of all concretes REF, CE1 and E1 are identical.

## Claims

1. Premix for a concrete composition, comprising a binder B, at least one water reducing polymer and a flow promoter FP,
said binder B comprising less than 55 dry weight% of Portland clinker, at least one supplementary cementitious material and optionally a filler F being present in a quantity equal or greater than 15% dry weight relative to the total weight of binder B,
said flow promoter FP comprising:
FP1. At least one non-ionic water-soluble compound,
FP2. Optionally at least one surfactant,
FP being present in a quantity of more than or equal to 0.001 dry weight% and less than or equal to 1.0 dry weight% relative to the total weight of the binder B,
FP1 being different from FP2.

2. Premix according to claim 1, wherein the binder B comprises less than 45 dry weight% of Portland clinker and at least one supplementary cementitious material, more specifically, less than less than 35 dry weight% of Portland clinker.

3. Premix according to any one of claims 1 or 2, wherein the supplementary cementitious material is chosen in the group comprising, preferably consisting of, ground granulated blast furnace slag, fly ash, activated clay, silica fume, basic oxygen furnace slag, natural pozzolanic materials, rice husk ash, activated recycled concrete fine aggregates or a mixture thereof.

4. Premix according to any one of claim 1 to 3, wherein the filler F is ground limestone, ground dolomite, marble powder, siliceous sands, recycled concrete fine aggregates or a mixture thereof, preferably, the filler is a limestone filler, more preferably, the filler is a natural material sourcing from stone-pit, such as calcite and its polymorphs, like aragonite or vaterite, and dolomite or precipitated calcium carbonates and mixtures thereof.

5. Premix according to any one of claims 1 to 3, wherein the water reducing polymer is chosen in the group comprising, preferably consisting of, lignosulfonate polymers, melamine sulfonate polymers, naphthalene sulfonate polymers, polycarboxylic acid ether polymers, polyoxyethylene phosphonates, vinyl copolymers, methallyl ether polycarboxylic acid ether and mixtures thereof.

6. Premix according to any one of claims 1 to 5, wherein the non-ionic water-soluble compound FP1 is chosen in the group comprising, preferably consisting of, polyols, preferably chosen in the group consisting of glycol, glycerol, erythritol, xylitol, arabitol, ribitol, sorbitol, dulcitol, mannitol, volemitol and mixtures thereof, polyvinylpyrrolidone (PVP), polyacrylamide polyethylene glycol, polyethylene oxide, propylene glycol, polypropylene glycol, poloxamers, polyvinylalcohol and mixtures thereof.

7. Premix according to any one of claims 1 to 6, wherein the surfactant FP2 is present and chosen in the group comprising, preferably consisting of,

8. Dry concrete composition comprising aggregates A, a binder B and a flow promoter FP:
said binder B comprising less than 55 dry weight% of Portland clinker, relative to the total dry weight of the binder B, at least one supplementary cementitious material and optionally a filler F being present in a quantity equal or greater than 15% dry weight relative to the total weight of binder B,
said flow promoter FP comprising:
FP1. At least one non-ionic water-soluble compound,
FP2. Optionally at least one surfactant,
FP being present in a quantity of more than or equal to 0.001 dry weight% and less than or equal to 1.0 dry weight% relative to the total weight of the binder B,
FP1 being different from FP2.

9. Wet concrete formulation comprising aggregates A, a binder B, a flow promoter FP water:
said binder B comprising less than 55 dry weight% of Portland clinker, relative to the total dry weight of the binder B, and at least one supplementary cementitious material and optionally a filler F being present in a quantity equal or greater than 15% dry weight relative to the total weight of binder B,
said flow promoter FP comprising:
FP1. At least one non-ionic water-soluble compound,
FP2. Optionally at least one surfactant,
FP being present in a quantity of more than or equal to 0.001 dry weight% and less than or equal to 1.0 dry weight% relative to the total weight of the binder B,
FP1 being different from FP2.

10. Hardened concrete product obtained from the wet concrete formulation according to claim 9.

11. Process for preparing a wet concrete formulation comprising a mixing step with water, aggregates A, a binder B and a flow promoter,
said binder B comprising less than 55 dry weight% of Portland clinker, relative to the total dry weight of the binder composition, at least one supplementary cementitious material and optionally a filler F being present in a quantity equal or greater than 15% dry weight relative to the total weight of binder B,
said flow promoter FP comprising:
FP1. At least one non-ionic water-soluble compound,
FP2. Optionally at least one surfactant,
the binder B being prepared before the mixing step or in situ during the mixing step of the different components of the binder B taken separately and/or under the form of premix(es),
FP being present in a quantity of more than or equal to 0.001 dry weight% and less than or equal to 1.0 dry weight% relative to the total weight of the binder B,
FP1 being different from FP2.

12. Process according to claim 11, wherein a weight ratio water to binder B is comprised between 0.1 and 0.5, advantageously between 0.15 and 0.45, and more advantageously between 0.2 and 0.4.

13. Method for decreasing the flow time of a wet concrete formulation in an inverted cone method according to standard XP P18-469 comprising a step of adding a flow promoter FP during a process of preparing said wet concrete formulation,
said flow promoter FP comprising:
FP1. At least one non-ionic water-soluble compound,
FP2. Optionally at least one surfactant,
FP1 being different from FP2,
FP1 and FP2 being added separately, simultaneously or under a mixture form.
